# EUROPÄISCHE PATENTSCHRIFT

(11) **EP 3 935 010 B1**
(45) Veröffentlichungstag und Bekanntmachung des Hinweises auf die Patenterteilung: **22.03.2023**
(21) Anmeldenummer: 20707351.1
(22) Anmeldetag: 20.02.2020
(51) Int. Cl.: C01B 3/34, C01B 3/50

(54) **VERFAHREN UND VORRICHTUNG ZUR SYNTHESEGASERZEUGUNG MIT KOHLENDIOXIDRÜCKFÜHRUNG**
PROCESS AND INSTALLATION FOR THE PRODUCTION OF SYNTHESIS GAS WITH CARBON DIOXIDE RECYCLING
PROCÉDÉ ET INSTALLATION POUR LA PRODUCTION DE GAZ DE SYNTHÈSE AVEC RECYCLAGE DE DIOXYDE DE CARBONE

(30) Priorität: 06.03.2019 DE 102019001557
(43) Veröffentlichungstag der Anmeldung: 12.01.2022
(73) Patentinhaber: Linde GmbH, 82049 Pullach (DE)
(72) Erfinder: HEINZEL, Albrecht, 81479 München (DE); HASELSTEINER, Thomas, 83623 Dietramszell (DE); PLEINTINGER, Stefan, 80802 München (DE)
(74) Vertreter: Fischer, Werner
(86) Internationale Anmeldenummer: PCT/EP2020/025079
(87) Internationale Veröffentlichungsnummer: WO 2020/177922

(56) Entgegenhaltungen:
- FR-A1- 2 823 192
- GB-A- 2 494 751
- US-A1- 2014 005 285
- US-A1- 2014 264 176

## Beschreibung

Die Erfindung betrifft ein Verfahren zur Erzeugung eines Kohlenmonoxid und Wasserstoff enthaltenden Synthesegases, wobei Erdgas mit einem ersten Kohlendioxid-Partialdruck (CO₂-Druck) bereitgestellt und u.a. durch Druckerhöhung zu einem Erdgas-Einsatz für eine thermochemische Konvertierung aufbereitet wird, bei der ein Syntheserohgas mit einem über dem ersten CO₂-Druck liegenden zweiten CO₂-Druck entsteht, aus dem nachfolgend zumindest Kohlendioxid abgetrennt wird, um das Synthesegas sowie Kohlendioxid zu erhalten, von dem zumindest ein Teil zurückgeführt und bei der thermochemischen Konvertierung des Erdgas-Einsatzes verwendet wird.

Weiterhin betrifft die Erfindung eine Vorrichtung zur Durchführung des erfindungsgemäßen Verfahrens.

Kohlenmonoxid und Wasserstoff enthaltende Synthesegase werden aus Erdgas vorwiegend durch Autothermalreformierung (ATR), Partielle Oxidation (POX), Dampfreformierung (SMR) oder Kombinationen dieser, aus dem Stand der Technik seit vielen Jahren bekannten Verfahren erzeugt. Das Erdgas wird hierbei etwa durch Entschwefelung, Anwärmung und Verdichtung zu einem Erdgas-Einsatz aufbereitet, der anschließend thermochemisch zu einem Syntheserohgas konvertiert wird, das neben Kohlenmonoxid und Wasserstoff auch eine größere Menge an Kohlendioxid sowie Wasser und andere, im Synthesegas unerwünschte Stoff enthält. Das Syntheserohgas, dessen Druck im Wesentlichen dem Druck des Erdgas-Einsatzes entspricht, wird daher mehreren Abtrennschritten unterzogen, um das Synthesegas in einer geforderten Zusammensetzung zu erhalten.

Aus dem Stand der Technik ist es bekannt, Kohlendioxid aus dem Syntheserohgas abzutrennen, zurückzuführen und bei der Konvertierung des Erdgas-Einsatzes zu verwenden. Das zurückgeführte Kohlendioxid wird mit Wasserstoff zu Kohlenmonoxid und Wasser bzw. mit elementarem Kohlenstoff zu Kohlenmonoxid umgesetzt, wodurch sich der Kohlenmonoxidanteil im Syntheserohgas erhöht.

Zur Kohlendioxidabtrennung wird das Syntheserohgas einer Gaswäsche unterzogen, bei der Kohlendioxid durch ein Waschmittel absorbiert wird, das dabei mit Kohlendioxid beladen anfällt. Der Druck des beladenen Waschmittels wird anschließend abgesenkt, um Kohlendioxid zu desorbieren, so dass neben regeneriertem Waschmittel zum erneuen Einsatz in der Gaswäsche Kohlendioxid mit einem Druck erhalten wird, der deutlich unterhalb des Drucks des Syntheserohgases bzw. des Erdgas-Einsatzes liegt.

Für die Abtrennung von Kohlendioxid aus Syntheserohgasen geeignete Gaswäschen wie Methanol- oder Aminwäschen verursachen hohe Investitions- und Betriebskosten und wirken sich schon allein deswegen negativ auf die Wirtschaftlichkeit der Synthesegaserzeugung aus. Falls das in der Gaswäsche erhaltene Kohlendioxid zurückgeführt und bei der Konvertierung des Erdgas-Einsatzes verwendet wird, beeinträchtigt der für die notwendige Kohlendioxidverdichtung erforderliche apparative und energetische Aufwand die Wirtschaftlichkeit zusätzlich.

Aufgabe der vorliegenden Erfindung ist es daher, ein Verfahren der gattungsgemäßen Art sowie eine Vorrichtung zu dessen Durchführung anzugeben, die geeignet sind, die beschriebenen Nachteile des Standes der Technik zu überwinden und die Wirtschaftlichkeit der Synthesegaserzeugung zu erhöhen.

Die gestellte Aufgabe wird verfahrensseitig erfindungsgemäß dadurch gelöst, dass das Syntheserohgas zur Abtrennung von Kohlendioxid retentatseitig über eine für Kohlendioxid durchlässige Membran geführt wird, die permeatseitig durch das bereitgestellte Erdgas gespült wird.

Die Abtrennung von Kohlendioxid aus einem kohlendioxidhaltigen Gasgemisch mit Hilfe einer Membran ist seit längerer Zeit Stand der Technik, siehe US2014/264176 A1. Eine hierfür geeignete Membran weist eine hohe Durchlässigkeit (Permeabilität) und Selektivität für Kohlendioxid auf, während sie für alle oder zumindest die meisten der übrigen Komponenten entweder undurchlässig ist oder eine deutlich kleinere Permeabilität besitzt. Auf der Permeatseite der Membran kann daher das abgetrennte Kohlendioxid in einem Permeatstrom erhalten werden, während die restlichen Komponenten des Gasgemisches als Retentatstrom von der anderen, der Retentatseite der Membran abgezogen werden.

Für die Höhe der Permeabilität bestimmend ist neben den Materialeigenschaften, der Dicke und der Querschnittsfläche der Membran vor allem der Unterschied zwischen den CO₂-Drücken auf der Retentat- und der Permeatseite. Je größer dieser Unterschied ist, desto höher ist die Permeabilität und desto effektiver kann Kohlendioxid aus dem kohlendioxidhaltigen Gasgemisch abgetrennt werden. Um eine Verringerung dieses Druckunterschiedes durch die Anreicherung von Kohlendioxid auf der Permeatseite und zu verhindern, wird die Permeatseite mit einem Spülgas bestrichen, das einen geringen CO₂-Druck aufweist.

Aufgrund der unterschiedlichen CO₂-Drücke in dem bereitgestellten Erdgas und dem Syntheserohgas wird daher zumindest ein Teil des im Syntheserohgas vorliegenden Kohlendioxids abgetrennt und gelangt über die Membran direkt in das bereitgestellte Erdgas, mit dem zusammen es weitergeführt und zum Erdgas-Einsatz aufbereitet wird. Insbesondere wird das über die Membran abgetrennte Kohlendioxid dabei gemeinsam mit dem Erdgas verdichtet, so dass zu seiner Rückführung auf die Verwendung eines gesonderten Kohlendioxidverdichters verzichtet werden kann.

Das erfindungsgemäße Verfahren ist umso effektiver, je stärker sich die CO₂-Drücke der beiden Gasströme unterscheiden. Sinnvollerweise ist der CO₂-Druck im Syntheserohgas wenigstens um den Faktor 10 größer als der CO₂-Druck im Erdgas.

Zweckmäßigerweise wird für die Kohlendioxidabtrennung aus dem Syntheserohgas eine Membran eingesetzt, die für Kohlendioxid eine hohe Permeabilität aufweist, die anderen im Syntheserohgas vorliegenden Komponenten dagegen nicht oder wesentlich schlechter passieren lässt, so dass Kohlendioxid weitgehen selektiv aus dem Syntheserohgas abgetrennt wird.

Je nach dem Schwefelgehalt des bereitgestellten Erdgases und dem für die Konvertierung des Erdgas-Einsatzes angewendeten Verfahren, kann ein Entschwefelungsschritt bei der Aufbereitung des bereitgestellten Erdgases notwendig sein. Hierbei wird der Schwefel zu Schwefelwasserstoff hydriert, der nachfolgend adsorptiv entfernt wird. Der für die Hydrierung benötigte Wasserstoff wird dabei nach dem Stand der Technik aufwendig aus dem Syntheserohgas beispielsweise durch Druckwechseladsorption abgetrennt und dem aufzubereitenden Erdgas zugemischt.

Liegt das Erdgas bei einem höheren Druck als der zurückgeführte Wasserstoff vor, so muss der Wasserstoff verdichtet werden.

Eine Ausgestaltung des erfindungsgemäßen Verfahrens sieht dagegen vor, das Syntheserohgas über eine Membran zu leiten, die nicht nur für Kohlendioxid, sondern auch für Wasserstoff durchlässig ist, so dass Kohlendioxid und Wasserstoff weitgehend selektiv aus dem Syntheserohgas abgetrennt werden. Zweckmäßigerweise lässt die Membran hierbei Wasserstoff in einer Menge passieren, die zumindest die Hydrierung eines Teils der Schwefelkomponenten erlaubt, die im bereitgestellten und auf der Permeatseite der Membran als Spülgas eingesetzten Erdgas vorliegen. Sinnvollerweise wird die Membran so gewählt, dass nicht mehr als die für die Hydrierung der Schwefelkomponenten erforderliche Wasserstoffmenge über die Membran in das bereitgestellte Erdgas gelangt.

Das über die Membran im Kohlendioxidgehalt abgereicherte, als Retentatstrom abgezogene Syntheserohgas wird gewöhnlich nicht die an das Synthesegas gestellten Reinheitsanforderungen erfüllen. Insbesondere wird sein Kohlendioxidgehalt zu hoch sein, so dass das Syntheserohgas einem weiteren Abtrennschritt zur Kohlendioxidentfernung unterzogen werden muss. Steht die Produktion von Kohlenmonoxid bei der Synthesegaserzeugung im Vordergrund, so sieht eine zweckmäßige Ausgestaltung des erfindungsgemäßen Verfahrens vor, in dem weiteren Abtrennschritt gewonnenes Kohlendioxid zur thermochemischen Konversion des Erdgas-Einsatzes zurückzuführen. Vorzugsweise wird das im Kohlendioxidgehalt abgereicherte Syntheserohgas hierbei einer Sauergaswäsche zugeführt, um Kohlendioxid möglichst vollständig abzutrennen und weitgehend selektiv zu gewinnen.

Vorzugsweise wird jedoch die gesamte für die Erzeugung des Syntheserohgases zurückzuführende Kohlendioxidmenge über die Membran aus dem Syntheserohgas abgetrennt, so dass kein stromabwärts der Membran evtl. noch aus dem Syntheserohgas abzutrennendes Kohlendioxid aufwendig zurückgeführt zu werden braucht und anderweitig verwendet werden kann.

Mit besonderem Vorzug wird das erfindungsgemäße Verfahren dann angewendet, wenn der Erdgas-Einsatz durch Dampfreformierung umgesetzt wird. Jedoch ist der Einsatz des Verfahrens auch dann vorteilhaft, wenn das Syntheserohgas durch Partielle Oxidation, Autothermalreformierung oder ein anderes thermochemisches Konversionsverfahren gewonnen wird.

Weiterhin betrifft die Erfindung eine Vorrichtung zur Erzeugung eines Kohlenmonoxid und Wasserstoff enthaltenden Synthesegases, mit einer, einen Verdichter umfassenden Aufbereitungseinrichtung zur Aufbereitung eines mit einem ersten Kohlendioxid-Partialdruck (CO₂-Druck) bereitgestellten Erdgases zu einem Erdgas-Einsatz, einem Konverter, in dem der Erdgas-Einsatz thermochemisch zu einem Syntheserohgas umgesetzt werden kann, das einen über dem ersten CO₂-Druck liegenden zweiten CO₂-Druck aufweist, sowie einer Abtrenneinrichtung, in der das Synthesegas aus dem Syntheserohgas zumindest durch die Abtrennung von Kohlendioxid erhältlich ist, wobei die Abtrenneinrichtung mit dem Konverter so verbunden ist, dass aus dem Syntheserohgas abgetrenntes Kohlendioxid zurückgeführt und bei der thermochemischen Umsetzung des Erdgas-Einsatzes verwendet werden kann.

Die gestellte Aufgabe wird vorrichtungsseitig erfindungsgemäß dadurch gelöst, dass die Aufbereitungseinrichtung mit der Abtrenneinrichtung über ein Membranmodul verbunden ist, das eine für Kohlendioxid durchlässige Membran aufweist, der retentatseitig das Syntheserohgas zuführbar ist, während permeatseitig das bereitgestellte Erdgas als Spülgas eingesetzt werden kann.

Vorzugsweise ist die Membran für Kohlendioxid durchlässig, während sie für die übrigen im Syntheserohgas vorhanden Stoffe praktisch undurchlässig ist. In einer Ausgestaltung der Erfindung ist die Membran jedoch nicht nur für Kohlendioxid, sondern auch für Wasserstoff durchlässig, während sie für die übrigen im Syntheserohgas vorhanden Stoffe praktisch undurchlässig ist.

Die für Kohlendioxid durchlässige Membran besteht vorzugsweise aus einem gummi- oder glasartigen Polymermaterial, wie es aus dem Stand der Technik bekannt ist. Sie kann auch als Komposit-Membran aufgebaut sein, in der aktive Komponenten wie etwa Amingruppen für eine Verbesserung der Selektivität sorgen.

Zusätzlich zu dem Membranmodul kann die Abtrenneinrichtung eine weitere, stromabwärts des Membranmoduls angeordnete und mit dem Konverter strömungstechnisch verbundene Einrichtung zur Abtrennung von Kohlendioxid aus dem Syntheserohgas aufweisen, so dass weiteres Kohlendioxid aus dem Syntheserohgas abtrenn- und zum Konverter zurückführbar ist. Vorzugsweise handelt es sich bei dieser Einrichtung um eine Sauergaswäsche, mit der Kohlendioxid weitgehend vollständig aus dem im Kohlendioxidgehalt abgereicherten Syntheserohgas entfernt und weitgehende selektiv gewonnen werden kann.

Bei dem thermochemischen Konverter kann es sich um jede Art von Reaktor handeln, der aus dem Stand der Technik zum Einsatz bei der Erzeugung von Synthesegas aus Erdgas bekannt ist. Vorzugsweise handelt es sich bei dem thermochemischen Konverter jedoch um einem Dampfreformer, einen Autothermalreformer oder um einen POX-Reaktor.

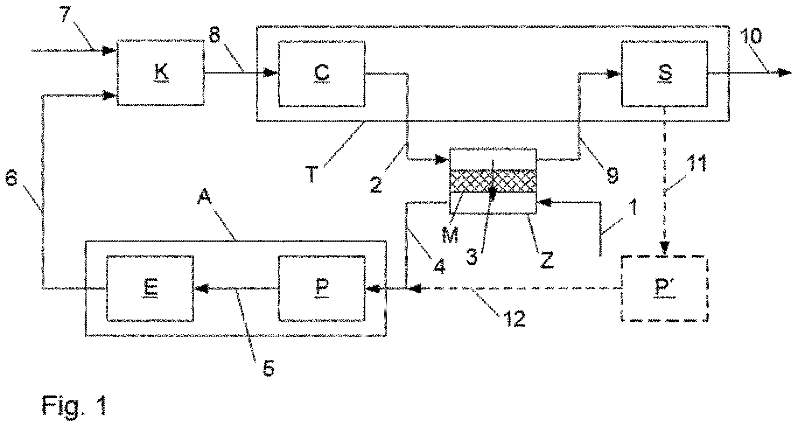

Im Folgenden soll die Erfindung anhand eines in der **Figur 1** schematisch dargestellten Ausführungsbeispiels näher erläutert werden.

Die Figur 1 zeigt die Erfindung in einer ersten und einer zweiten bevorzugten Variante.

In beiden bevorzugten Varianten wird über Leitung 1 Erdgas bereitgestellt, um es zu einem Wasserstoff und Kohlenmonoxid enthaltenden Syntheserohgas 2 umzusetzen, in dem Kohlendioxid mit einem höheren Partialdruck vorliegt, als im bereitgestellten Erdgas 1. Sowohl das bereitgestellte Erdgas 1 als auch das Syntheserohgas 2 werden in das Membranmodul Z eingeleitet, in dem eine selektiv für Kohlendioxid durchlässige Membran M angeordnet ist, deren Retentatseite von dem Syntheserohgas 2 und deren Permeatseite von dem bereitgestellten Erdgas 1 bestrichen wird. Aufgrund seines größeren Partialdrucks auf der Permeatseite, wird Kohlendioxid 3 über die Membran M aus dem Syntheserohgas 2 abgetrennt und in das als Spülgas wirkende Erdgas 1 überführt, das mit Kohlendioxid angereichert das Membranmodul Z über Leitung 4 verlässt. In der Aufbereitungseinrichtung A wird das mit Kohlendioxid angereicherte Erdgas 4 zunächst über den Kompressor P verdichtet und anschließend über Leitung 5 der Entschwefelungseinrichtung E zugeführt, um einen weitgehend schwefelfreien Erdgas-Einsatz 6 zu erhalten. Gemeinsam mit Dampf 7 wird der Erdgas-Einsatz 6 dem Konverter K, bei dem es sich etwa um einen SMR- oder einen ATR-Reaktor handelt, zugeführt und thermisch zu einem kohlenmonoxidreichen, Wasserstoff, Wasser und Kohlendioxid enthaltende Syntheserohgas 8 konvertiert, das nach Abkühlung und der Entfernung von Wasser aus der in der Abtrenneinrichtung T angeordneten Kühleinrichtung C über Leitung 2 zur Abtrennung von Kohlendioxid in das MembranModul Z geleitet wird. Aus dem im Kohlendioxidgehalt abgereicherten Syntheserohgas 9 wird in der Sauergaswäsche S insbesondere durch die Entfernung von verbliebenem Kohlendioxid schließlich das weitgehend aus Wasserstoff und Kohlenmonoxid bestehende Synthesegas 10 gewonnen.

Um den Kohlenmonoxidanteil im Synthesegas 10 zu erhöhen, wird in der zweiten bevorzugten Variante der Erfindung das in der Sauergaswäsche S aus dem im Kohlendioxidgehalt abgereicherten Syntheserohgas 8 abgetrennte Kohlendioxid 11 über den Verdichter P' komprimiert und anschließend über Leitung 12 dem bereits mit Kohlendioxid angereicherten Erdgases 4 zugemischt.

## Patentansprüche

1. Verfahren zur Erzeugung eines Kohlenmonoxid und Wasserstoff enthaltenden Synthesegases (10), wobei Erdgas (1) mit einem ersten Kohlendioxid-Partialdruck (CO₂-Druck) bereitgestellt und u.a. durch Druckerhöhung (P) zu einem Erdgas-Einsatz (6) für eine thermochemische Konvertierung (K) aufbereitet wird, bei der ein Syntheserohgas (2) mit einem über dem ersten CO₂-Druck liegenden zweiten CO₂-Druck entsteht, aus dem nachfolgend zumindest Kohlendioxid (3, 11) abgetrennt wird, um das Synthesegas (9) sowie Kohlendioxid zu erhalten, von dem zumindest ein Teil zurückgeführt und bei der thermochemischen Konvertierung des Erdgas-Einsatzes (6) verwendet wird, **dadurch gekennzeichnet, dass** das Syntheserohgas (2) zur Abtrennung von Kohlendioxid retentatseitig über eine für Kohlendioxid durchlässige Membran (M) geführt wird, die permeatseitig durch das bereitgestellte Erdgas (1) gespült wird.

2. Verfahren nach Anspruch 1, **dadurch gekennzeichnet, dass** die thermische Konversion (K) des Erdgas-Einsatzes (6) durch Dampfreformierung oder Autothermalreformierung oder Partielle Oxidation erfolgt.

3. Vorrichtung zur Erzeugung eines Kohlenmonoxid und Wasserstoff enthaltenden Synthesegases (10), mit einer, einen Verdichter (P) umfassenden Aufbereitungseinrichtung (A) zur Aufbereitung eines mit einem ersten Kohlendioxid-Partialdruck (CO₂-Druck) bereitgestellten Erdgases (1) zu einem Erdgas-Einsatz (6), einem Konverter (K), in dem der Erdgas-Einsatz (6) thermochemisch umgesetzt werden kann, um ein Syntheserohgas (2) zu erhalten, das einen über dem ersten CO₂-Druck liegenden zweiten CO₂-Druck aufweist, sowie einer Abtrenneinrichtung (T), in der das Synthesegas (10) aus dem Syntheserohgas (2) zumindest durch die Abtrennung von Kohlendioxid (3, 11) erhältlich ist, wobei die Abtrenneinrichtung (T) mit dem Konverter (K) so verbunden ist, dass aus dem Syntheserohgas (2) abgetrenntes Kohlendioxid (3, 11) zurückgeführt und bei der thermochemischen Umsetzung des Erdgas-Einsatzes (6) verwendet werden kann, **dadurch gekennzeichnet, dass** die Aufbereitungseinrichtung (A) mit der Abtrenneinrichtung (T) über ein Membranmodul (Z) verbunden ist, das eine weitgehend für Kohlendioxid durchlässige Membran (M) aufweist, der retentatseitig das Syntheserohgas (2) zuführbar ist, während permeatseitig das bereitgestellte Erdgas (1) als Spülgas eingesetzt werden kann.

4. Vorrichtung nach Anspruch 3, **dadurch gekennzeichnet, dass** die Membran (M) aus einem gummi- oder glasartigen Polymermaterial besteht oder als Komposit-Membran mit aktiven Komponenten aufgebaut ist.

5. Vorrichtung nach einem der Ansprüche 3 oder 4, **dadurch gekennzeichnet, dass** der thermische Konverter (K) ein Dampfreformer oder ein Autothermalreformer oder ein POX-Reaktor ist.

## Claims

1. Method for producing a synthesis gas (10) containing carbon monoxide and hydrogen, natural gas (1) being provided with a first carbon dioxide partial pressure (CO₂ pressure) and being processed, inter alia, by increasing the pressure (P) to form a natural gas feed (6) for a thermochemical conversion (K) in which a raw synthesis gas (2) is produced with a second CO₂ pressure which is above the first CO₂ pressure, from which raw synthesis gas at least carbon dioxide (3, 11) is subsequently separated in order to obtain the synthesis gas (9) and carbon dioxide, of which at least some is recycled and used in the thermochemical conversion of the natural gas feed (6), **characterized in that,** in order to separate carbon dioxide, the raw synthesis gas (2) is guided on the retentate side via a membrane (M) which is permeable to carbon dioxide and is rinsed on the permeate side by the natural gas (1) provided.

2. Method according to claim 1, **characterized in that** the thermal conversion (K) of the natural gas feed (6) is carried out by steam reforming or autothermal reforming or partial oxidation.

3. Device for producing a synthesis gas (10) containing carbon monoxide and hydrogen, having a processing apparatus (A), which comprises a compressor (P), for processing a natural gas (1) which is provided with a first carbon dioxide partial pressure (CO₂ pressure) to form a natural gas feed (6), a converter (K) in which the natural gas feed (6) can be thermochemically reacted in order to obtain a raw synthesis gas (2) which has a second CO₂ pressure which is above the first CO₂ pressure, and a separation apparatus (T) in which the synthesis gas (10) is obtainable from the raw synthesis gas (2) at least by separating carbon dioxide (3, 11), the separation apparatus (T) being connected to the converter (K) such that carbon dioxide (3, 11) which is separated from the raw synthesis gas (2) can be recycled and can be used in the thermochemical reaction of the natural gas feed (6), **characterized in that** the processing apparatus (A) is connected to the separating apparatus (T) via a membrane module (Z) which has a membrane (M) which is largely permeable to carbon dioxide and raw synthesis gas (2) can be supplied on the retentate side, while the natural gas (1) provided can be used as a rinsing gas on the permeate side.

4. Device according to claim 3, **characterized in that** the membrane (M) consists of a rubber-like or glass-like polymer material or is constructed as a composite membrane with active components.

5. Device according to either claim 3 or claim 4, **characterized in that** the thermal converter (K) is a steam reformer or an autothermal reformer or a POX reactor.

## Revendications

1. Procédé pour la production d'un gaz de synthèse (10) contenant du monoxyde de carbone et de l'hydrogène, dans lequel du gaz naturel (1) comportant une première pression partielle de dioxyde de carbone (pression de CO₂) est fourni et est entre autres transformé en une charge de gaz naturel (6) par augmentation de pression (P) pour une conversion thermochimique (K) de laquelle résulte un gaz de synthèse brut (2) comportant une seconde pression de CO₂ supérieure à la première pression de CO₂ et à partir duquel au moins du dioxyde de carbone (3, 11) est ensuite séparé pour obtenir le gaz de synthèse (9) ainsi que du dioxyde de carbone, dont au moins une partie est recyclée et utilisée lors de la conversion thermochimique de la charge de gaz naturel (6), **caractérisé en ce que** le gaz de synthèse brut (2) est guidé côté rétentat à travers une membrane (M) perméable au dioxyde de carbone pour la séparation de dioxyde de carbone, laquelle membrane est rincée côté perméat par le gaz naturel (1) fourni.

2. Procédé selon la revendication 1, **caractérisé en ce que** la conversion thermique (K) de la charge de gaz naturel (6) s'effectue par reformage à la vapeur ou reformage autothermique ou oxydation partielle.

3. Dispositif pour la production d'un gaz de synthèse (10) contenant du monoxyde de carbone et de l'hydrogène, comportant un appareil de transformation (A) comprenant un compresseur (P) pour la transformation d'un gaz naturel (1) fourni comportant une première pression partielle de dioxyde de carbone (pression de CO₂) en une charge de gaz naturel (6), un convertisseur (K) dans lequel la charge de gaz naturel (6) peut être convertie de manière thermochimique afin d'obtenir un gaz de synthèse brut (2) présentant une seconde pression de CO₂ supérieure à la première pression de CO₂, ainsi qu'un appareil de séparation (T) dans lequel le gaz de synthèse (10) est obtenu à partir du gaz de synthèse brut (2) au moins par la séparation de dioxyde de carbone (3, 11), l'appareil de séparation (T) étant relié au convertisseur (K) de sorte que du dioxyde de carbone (3, 11) séparé du gaz de synthèse brut (2) peut être recyclé et utilisé lors de la conversion thermochimique de la charge de gaz naturel (6), **caractérisé en ce que** l'appareil de transformation (A) est relié à l'appareil de séparation (T) par l'intermédiaire d'un module à membrane (Z) qui présente une membrane (M) en grande partie perméable au dioxyde de carbone à laquelle le gaz de synthèse brut (2) peut être amené côté rétentat pendant que le gaz naturel (1) fourni peut être utilisé en tant que gaz de rinçage côté perméat.

4. Dispositif selon la revendication 3, **caractérisé en ce que** la membrane (M) est constituée d'un matériau polymère de type caoutchouc ou verre ou est réalisée en tant que membrane composite comportant des composants actifs.

5. Dispositif selon l'une des revendications 3 ou 4, **caractérisé en ce que** le convertisseur thermique (K) est un reformeur à vapeur ou un reformeur autothermique ou un réacteur PCX.
